# EUROPEAN PATENT SPECIFICATION

(11) **EP 4 528 519 B1**
(45) Date of publication and mention of the grant of the patent: **18.02.2026**
(21) Application number: 24743645.4
(22) Date of filing: 27.03.2024
(51) Int. Cl.: G06F 13/374, G06F 13/38

(54) **BUS MONITORING AND CONTROL METHOD, ELECTRONIC DEVICE, CHIP AND STORAGE MEDIUM**
BUSÜBERWACHUNGS- UND STEUERUNGSVERFAHREN, ELEKTRONISCHE VORRICHTUNG, CHIP UND SPEICHERMEDIUM
PROCÉDÉ DE SURVEILLANCE ET DE COMMANDE DE BUS, DISPOSITIF ÉLECTRONIQUE, PUCE ET SUPPORT DE STOCKAGE

(30) Priority: 08.08.2023 CN 202310992708
(43) Date of publication of application: 26.03.2025
(73) Proprietor: Honor Device Co., Ltd., Shenzhen, Guangdong 518040 (CN)
(72) Inventor: WANG, Yibo, Shenzhen, Guangdong 518040 (CN); ZHONG, Hao, Shenzhen, Guangdong 518040 (CN); WANG, Feng, Shenzhen, Guangdong 518040 (CN)
(74) Representative: Epping - Hermann - Fischer
(86) International application number: PCT/CN2024/084165
(87) International publication number: WO 2025/030874

(56) References cited:
- CN-A- 111 033 486
- CN-A- 116 075 814
- CN-A- 116 719 699
- US-A1- 2018 329 838
- US-A1- 2019 079 884
- US-A1- 2022 058 154
- US-B1- 10 566 975
- US-B1- 10 572 438

## Description

### TECHNICAL FIELD

This application relates to the field of bus communication technologies, and in particular, to a controlling method, an electronic device, a chip, and a storage medium.

### BACKGROUND

An existing system power management interface (System Power Management Interface, SPMI) is a two-wire serial interface, and is usually used as a power management interface. A master and a slave may be connected by using the SPMI interface. For example, the master may be a system-on-a-chip (System-on-a-Chip, SOC), and the slave may be a power management chip (Power Management IC, PMIC). By using the SPMI bus, a specified workload or a processor performance level required for an application of a related device can be accurately monitored and controlled, and a voltage of a power supply can be dynamically controlled in real time based on the performance level. However, data in a host-slave system based on the SPMI bus needs to be controlled by using a master, and the data in the host-slave system cannot be stably controlled by using an external device.

### SUMMARY

In view of the foregoing content, it is necessary to provide a bus monitoring and controlling method, an electronic device, a chip, and a storage medium, to resolve a problem that data in a host-slave system cannot be stably controlled based on an SPMI bus by using an external device. The invention is set out in the appended claims.

### BRIEF DESCRIPTION OF DRAWINGS

FIG. 1 is a diagram of an architecture of an SPMI bus in related technologies;
FIG. 2 is a diagram of an SPMI bus instruction period according to an embodiment of this application;
FIG. 3 is a diagram of an architecture of an SPMI bus according to an embodiment of this application;
FIG. 4 is a diagram of functional modules of an integrated circuit device according to an embodiment of this application;
FIG. 5 is a diagram of connections between an integrated circuit device and each of a master and a slave according to an embodiment of this application;
FIG. 6 is a diagram of connections between an integrated circuit device and each of a master and a slave according to another embodiment of this application;
FIG. 7A and FIG. 7B are a flowchart of a bus monitoring and controlling method according to an embodiment of this application;
FIG. 8 is a diagram of connections between an integrated circuit device and each of a master and a slave according to another embodiment of this application;
FIG. 9A and FIG. 9B are a schematic flowchart of a method for monitoring an SPMI bus according to an embodiment of this application;
FIG. 10 is a flowchart of a bus monitoring and controlling method according to another embodiment of this application; and
FIG. 11 is a diagram of a hardware structure of an electronic device according to an embodiment of this application.

### DESCRIPTION OF EMBODIMENTS

The terms "first" and "second" mentioned below are used merely for the purpose of description, and shall not be construed as indicating or implying relative importance or implying a quantity of indicated technical features. Therefore, features defined by using "first" and "second" may explicitly or implicitly include one or more such features. In descriptions of some embodiments of this application, words such as "example" or "for example" are used to mean an example, an illustration, or a description. Any embodiment or design scheme described by using "example" or "for example" in some embodiments of this application should not be construed as being more preferred or more advantageous than another embodiment or design scheme. In particular, the word such as "example" or "for example" as used herein is intended to present a related concept in a specific manner.

Unless otherwise defined, all technical and scientific terms used in this specification have same meanings as those usually understood by a person skilled in the art in this application. Terms used in this specification of this application are merely intended to describe objectives of the specific embodiments.

It should be understood that "/" means "or" unless otherwise stated in this application. For example, A/B may indicate A or B. In some embodiments of this application, "and/or" is merely an association relationship that describes associated objects, and indicates that three relationships may exist. For example, A and/or B may indicate three cases: Only A exists, both A and B exist, and only B exists. "At least one" means one or more. "A plurality of" means two or more. For example, "at least one of a, b, or c" may indicate seven cases: "a", "b", "c", "a and b", "a and c", "b and c", and "a, b, and c".

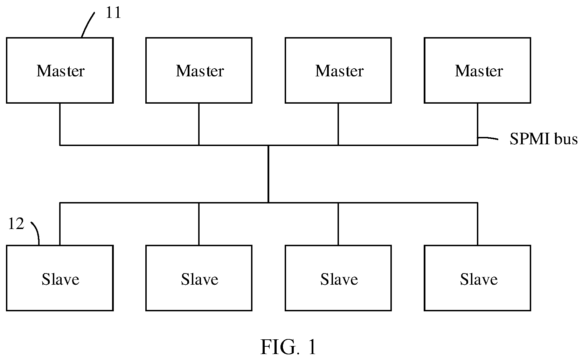

FIG. 1 is a diagram of an architecture of a system power management interface (System Power Management Interface, SPMI) bus in related technologies. The SPMI bus is an asynchronous bus, and is connected to a plurality of masters 11 and a plurality of slaves 12. The plurality of masters 11 exchange data with the plurality of slaves 12 by using the SPMI bus. The master 11 and the slave 12 perform bus preemption through arbitration to resolve a conflict problem. When the bus is in an idle state, the plurality of masters 11 or the plurality of slaves 12 access the bus by using a bus arbitration request. The master 11 of the bus monitors the bus arbitration request and grants the bus to a requester.

When the bus is in an idle state, the plurality of masters 11 or the plurality of slaves 12 access the bus by using a bus arbitration request. The master 11 of the bus (the master is a current owner of the bus) monitors the bus arbitration request and grants the bus to a requester. Usually, the SPMI bus may include a clock signal line and a data signal line. The clock signal line is configured to transmit a clock signal SCLK (Serial Clock). The data signal line is configured to transmit a data signal SDATA (Serial Data). The SPMI bus can support connections to four master machines 11 and access to 16 slaves 12 at the same time. For example, the SPMI bus may be connected to one or more masters 11 on a system-on-a-chip (System-on-a-Chip, SOC), or to one or more slaves 12 on a power management chip (Power Management IC, PMIC).

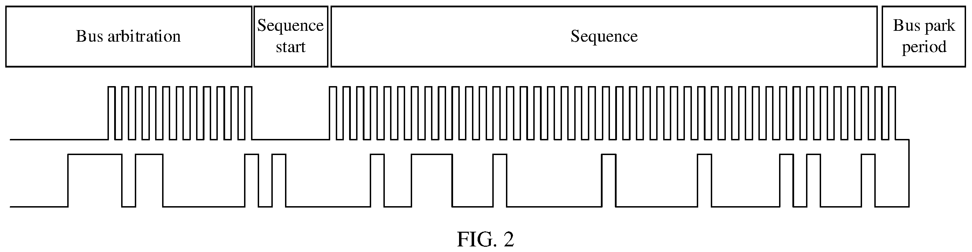

FIG. 2 is a diagram of an SPMI bus instruction period according to an embodiment of this application. In an embodiment of this application, the SPMI bus instruction period includes a plurality of the following phases: bus arbitration, sequence start, a frame sequence, and a bus park period. In the bus arbitration phase, when the data signal line of the SPMI bus is pulled up, the master 11 that currently occupies the SPMI bus releases a clock signal SCLK by using the clock signal line. In a case of a corresponding clock signal SCLK, the master 11 or the slave 12 connected to the SPMI bus declares a priority of itself by pulling up the data signal line. If a device with a higher priority requests to occupy the SPMI bus, the master 11 that currently occupies the SPMI bus releases the bus to the device with the higher priority based on the priority. After preempting the SPMI bus and becoming a controller of the SPMI bus, a device such as the master 11 or the slave 12 obtains a control right of a clock signal SCLK of the SPMI bus, and provides the clock signal SCLK of the SPMI bus. After bus arbitration is completed, the SPMI bus enters the sequence start phase. The sequence start phase may be a bus buffer phase. In the sequence start phase, a device that wins bus preemption pulls down a clock signal SCLK, and controls the data signal line to first pull up a data signal SDATA and then pull down the data signal SDATA, to generate a sequence start condition (sequence start condition, SSC). The slave 12 on the SPMI bus, for example, a power management chip, is ready to receive a subsequent frame sequence after detecting the sequence start condition.

In an embodiment of this application, the frame sequence is used to execute a data transmission instruction. The data transmission instruction includes information such as a transmission command, a transmission address, and transmission data. In an embodiment of this application, types of the transmission command include but are not limited to: that the master 11 performs reading in a register of the slave 12, that the master 11 performs writing in the register of the slave 12, and that the slave 12 performs writing in a register of the master 11. In an embodiment of this application, the transmission address includes an address of the slave 12 and an address of the register of the slave 12. For example, a specific data transmission instruction may be a command that a master writes 01 data into a 0011 register of a slave whose address is 0001. After the data transmission instruction is completed in the frame sequence, the SPMI bus enters the bus park period.

In an embodiment of this application, the bus park period phase of the SPMI bus is a bus park process. In this case, the SPMI bus is in an idle state. When the SPMI bus is in the bus park period phase, the clock signal SCLK and the transmission data signal SDATA of the SPMI bus are both pulled down. For example, the clock signal SCLK and the transmission data signal SDATA of the SPMI bus are pulled down to a low level.

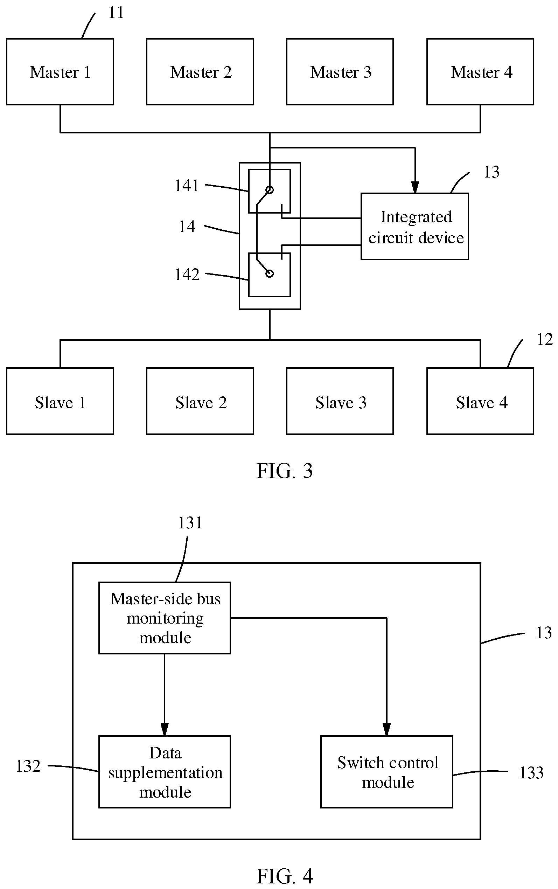

However, in a related technology, data exchange between the master 11 and the slave 12 on the SPMI bus shown in FIG. 1 is controlled by using the master 11, and cannot be controlled by using an external device. To resolve a problem that data exchange between the master 11 and the slave 12 on the SPMI bus cannot be controlled by using an external device, an embodiment of this application provides an architecture of another SPMI bus. FIG. 3 is a diagram of an architecture of an SPMI bus according to an embodiment of this application. A plurality of masters 11 are connected to an integrated circuit (Integrated Circuit, IC) device 13. The plurality of masters 11 are connected to the integrated circuit device 13 by using the SPMI bus. The plurality of masters 11, a plurality of slaves 12, and the integrated circuit device 13 are separately connected to the switch module 14 by using the SPMI bus. The integrated circuit device 13 controls the switch module 14 to implement switching between a first path and a second path. If the switch module 14 is switched to the first path, the master 11 and the slave 12 are separately connected to the integrated circuit device 13 by using the SPMI bus. If the switch module 14 is switched to the second path, the master 11 is directly connected to the slave 12 by using the SPMI bus.

In an embodiment of this application, the switch module 14 includes a first switch 141 and a second switch 142. The first switch 141 and the second switch 142 each are a two-path high-speed switch. A first path of the first switch 141 and a first path of the second switch 142 are both connected to the integrated circuit device 13, and a second path of the first switch 141 is connected to a second path of the second switch 142. In this way, if the first switch 141 and the second switch 142 each are switched to the first path, the integrated circuit device 13 is separately connected to the master 11 and the slave 12 by using the SPMI bus. If the first switch 141 and the second switch 142 each are switched to the second path, the master 11 is directly connected to the slave 12 by using the SPMI bus.

In an embodiment of this application, a working state of the integrated circuit device 13 includes a first working state and a second working state. The first working state represents that the integrated circuit device 13 sends data of the non-master to the slave 12. In other words, the integrated circuit device 13 performs data supplementation to the slave 12. The data from the non-master is used as supplementary data, and the supplementary data is sent to the slave 12. The second working state represents that the integrated circuit device 13 controls the master 11 to directly exchange data with the slave 12.

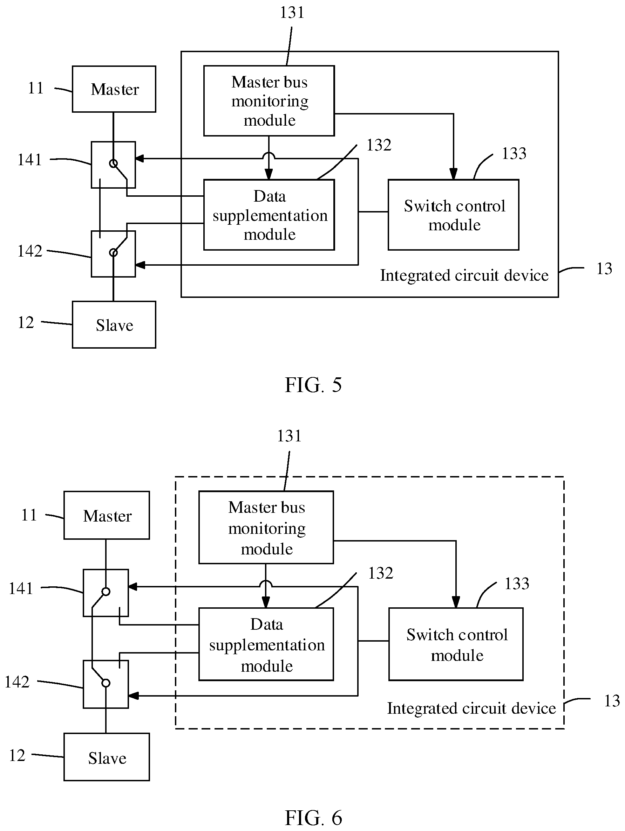

FIG. 4 is a diagram of functional modules of an integrated circuit device 13 according to an embodiment of this application. The integrated circuit device 13 includes a bus monitoring module 131, a data supplementation module 132, and a switch control module 133. FIG. 5 is a diagram of connections between an integrated circuit device and each of a master and a slave according to an embodiment of this application. In an embodiment of this application, if the integrated circuit device 13 works in the first working state, the first switch 141 is switched to the first path, and the second switch 142 is switched to the first path. In this case, the master 11 is communicatively connected to the integrated circuit device 13 through the first path of the first switch 141, and the slave 12 is communicatively connected to the integrated circuit device 13 through the first path of the second switch 142. FIG. 6 is a diagram of connections between an integrated circuit device and each of a master and a slave according to another embodiment of this application. In an embodiment of this application, if the integrated circuit device 13 works in the second working state, the first switch 141 is switched to the second path, and the second switch 142 is switched to the second path. The master 11 directly exchanges data with the slave 12 through the second path of the first switch 141 and the second path of the second switch 142.

In an embodiment of this application, the bus monitoring module 131 is separately connected to the data supplementation module 132 and the switch control module 133. The switch control module 133 is connected to the first switch 141 and the second switch 142, and is configured to control each of the first switch 141 and the second switch 142 to be switched between the first path and the second path. The data supplementation module 132 is separately connected to the first path of the first switch 141 and the first path of the second switch 142. The bus monitoring module 131 is configured to: monitor communication data between the master 11 and the slave 12, and determine a working state of the integrated circuit device 13 based on the detected communication data. If it is determined that the communication data between the master 11 and the slave 12 includes a preset instruction, it is determined that the working state of the integrated circuit device 13 is the first working state. If it is determined that the communication data between the master 11 and the slave 12 does not include a preset instruction, it is determined that the working state of the integrated circuit device 13 is the second working state. The preset instruction includes but is not limited to: an instruction of performing reading in the slave 12 by the master 11, an instruction of performing writing in the slave 12 by the master 11, and an instruction of performing writing in the master 11 by the slave 12. When determining that the working state of the integrated circuit device 13 is the second working state, the bus monitoring module 131 determines a switch switching time, and notifies the switch control module 133 of the switch switching time. The switch control module 133 controls, based on the switch switching time, each of the first switch 141 and the second switch 142 to be switched between paths and implement a corresponding connection. For example, when the integrated circuit device 13 works in the second working state, the switch control module 133 controls, based on the switch switching time, each of the first switch 141 and the second switch 142 to be switched to the second path. When the integrated circuit device 13 works in the first working state, the switch control module 133 controls, based on the switch switching time, each of the first switch 141 and the second switch 142 to be switched to the first path. When determining that the working state of the integrated circuit device 13 is the first working state, the bus monitoring module 131 sends a data supplementation notification to the data supplementation module 132. The data supplementation module 132 determines supplementary data based on the data supplementation notification, and sends the supplementary data to the slave 12. The supplementary data is data preset based on a type of the slave 12. For example, if the slave 12 is a power management chip, the supplementary data is voltage data or current data.

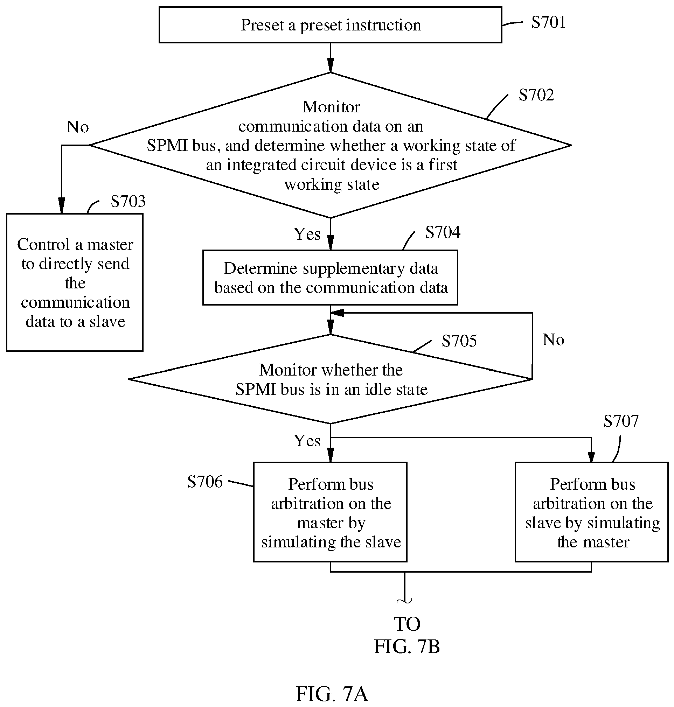

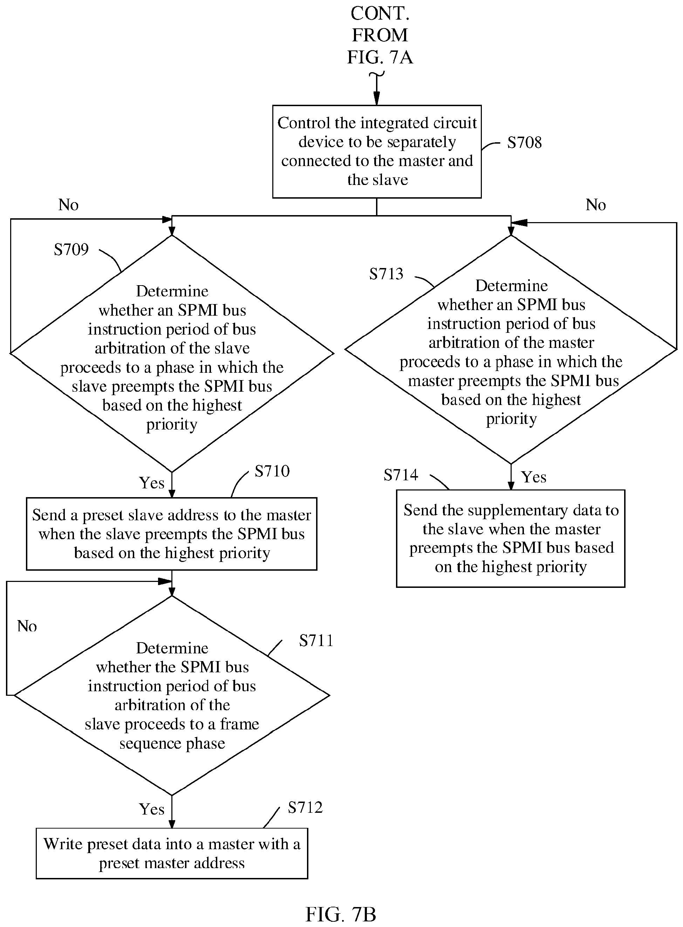

The integrated circuit device 13 monitors the communication data between the master 11 and the slave 12 on the SPMI bus. When determining based on the detected communication data that the working state of the integrated circuit device 13 is the second working state, each of the first switch 141 and the second switch 142 is switched to the second path, so that the master 11 can directly communicate with the slave 12. In this way, exchange of original data between the master 11 and the slave 12 is ensured. When it is determined, based on the detected communication data, that the working state of the integrated circuit device 13 is the first working state, the supplementary data is determined, and the supplementary data is sent to the slave 12. In this way, the integrated circuit device 13 controls data of the slave 12. FIG. 7A and FIG. 7B are a flowchart of a bus monitoring and controlling method according to an embodiment of this application. The bus monitoring and controlling method is applied to an integrated circuit device 13. The method specifically includes the following steps.

Step S701: Preset a preset instruction.

In an embodiment of this application, the bus monitoring module 131 presets the preset instruction. For example, the preset instruction may be at least one of: an instruction of performing reading in the slave 12 by the master 11, an instruction of performing writing in the slave 12 by the master 11, and an instruction of performing writing in the master 11 by the slave 12. The foregoing is merely an example for description. Actual application is not limited thereto. For example, the preset instruction may be an instruction that the master 11 with a source address of 0001 writes a value "01" into the slave 12 with a destination address of 1111.

Step S702: Monitor communication data on the SPMI bus, and determine whether a working state of the integrated circuit device 13 is a first working state.

In an embodiment of this application, the bus monitoring module 131 monitors the communication data on the SPMI bus, for example, communication data sent by the master 11 to the slave 12; and determines whether the communication data includes the preset instruction. If it is determined that the communication data does not include the preset instruction, the bus monitoring module 131 determines that the integrated circuit device 13 is in a second working state, and performs step S703. If it is determined that the communication data includes the preset instruction, the monitoring module 133 determines that the integrated circuit device 13 is in the first working state, and performs step S704. When determining that the communication data includes the preset instruction, the bus monitoring module 131 continuously monitors the SPMI bus, to subsequently ensure that the data supplementation module 132 successfully preempts the bus.

Step S703: Control the master to directly send the communication data to the slave 12.

In an embodiment of this application, when the integrated circuit device 13 works in the second working state, the switch control module 133 controls each of the first switch 141 and the second switch 142 to be switched to a second path. In this way, the master 11 establishes a communication channel to the slave 12 by using the first switch 141 and the second switch 142, and directly transmits the communication data to the slave by using the first switch 141 and the second switch 142.

Step S704: Determine supplementary data based on the communication data.

In an embodiment of this application, when determining based on the preset instruction in the communication data that the working state of the integrated circuit device 13 is the first working state, the bus monitoring module 131 sends a data supplementation notification to the data supplementation module 132. The data supplementation module 132 determines the supplementary data based on the data supplementation notification. The supplementary data is data preset based on a type of the slave 12. For example, if the slave 12 is a power management chip, the supplementary data is voltage data or current data.

Step S705: Monitor whether the SPMI bus is in an idle state.

In an embodiment of this application, if the bus monitoring module 131 detects that the clock signal line and the data signal line of the SPMI bus each are in a high-resistance state, it is determined that the SPMI bus is in the idle state. If the SPMI bus is in the idle state, step S706 and step S707 may be performed synchronously. In an embodiment of this application, synchronous execution indicates execution at a same time point. If the SPMI bus is not in the idle state, step S705 is repeatedly performed until it is detected that the SPMI bus enters the idle state.

Step S706: Perform bus arbitration on the master by simulating the slave.

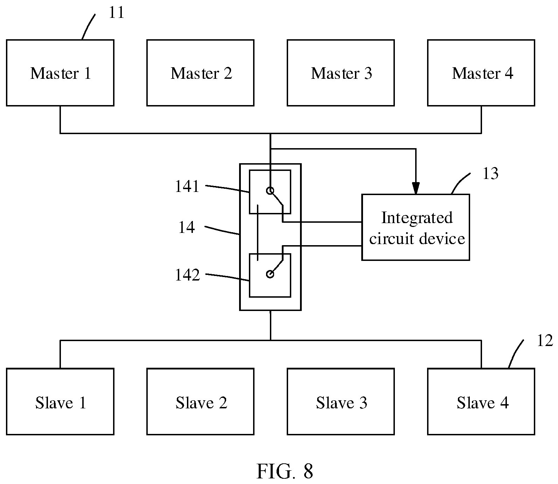

FIG. 8 is a diagram of connections between an integrated circuit device and each of a master and a slave according to another embodiment of this application. An upper port of the integrated circuit device 13 is connected to the master 11 by using an SPMI bus, and a lower port of the integrated circuit device 13 is connected to the slave 11 by using an SPMI bus. Through pulling up a data signal line of the SPMI bus connected to the upper port, the data supplementation module 132 performs bus arbitration on the master 11 by simulating the slave 12. Pulling up the data signal line of the SPMI bus connected to the upper port represents setting the data signal line of the SPMI bus connected to the upper port to a high potential, for example, a potential higher than 1.5 V. The data supplementation module 132 performs bus arbitration on the master 11 by simulating the slave 12, to ensure that data supplementation performed by the integrated circuit device 13 is not interfered with by a bus operation performed by the master 11.

Step S707: Perform bus arbitration on the slave by simulating the master.

In an embodiment of this application, through pulling up a data signal line of the SPMI bus connected to the lower port, the data supplementation module 132 performs bus arbitration on the slave 12 by simulating the master 11. Pulling up the data signal line of the SPMI bus connected to the lower port represents setting the data signal line of the SPMI bus connected to the lower port to a high potential.

Step S708: Control the integrated circuit device to be separately connected to the master and the slave.

In an embodiment of this application, the switch control module 133 controls each of the first switch 141 and the second switch 142 to be switched to the first path. In this way, the integrated circuit device 13 establishes communication channels to the master 11 and the slave 12 by using the first switch 141 and the second switch 142. After execution of step S708 is completed, the procedure proceeds to step S709 and step S713.

Step S709: Determine whether an SPMI bus instruction period of bus arbitration of the slave proceeds to a phase in which the slave preempts the SPMI bus based on the highest priority.

In an embodiment of this application, if the SPMI bus instruction period of bus arbitration of the slave proceeds to the phase in which the slave preempts the SPMI bus based on the highest priority, step S710 is performed; or if the SPMI bus instruction period of bus arbitration of the slave does not proceed to the phase in which the slave preempts the SPMI bus based on the highest priority, step S709 is repeatedly performed, and step S710 in the procedure is performed until a phase in which the slave preempts the SPMI bus based on the highest priority arrives.

Step S710: Send a preset slave address to the master when the slave preempts the SPMI bus based on the highest priority.

In an embodiment of this application, the preset slave address is different from addresses of all slaves 12 connected to the integrated circuit device 13. For example, the addresses of all the slaves 12 connected to the SPMI bus include Address0 to Address15. The data supplementation module 132 sends, to the master 11, a preset slave address Address 16 different from Address0 to Address 15. Step S711: Determine whether the SPMI bus instruction period of bus arbitration of the slave proceeds to a frame sequence phase.

In an embodiment of this application, if the SPMI bus instruction period of bus arbitration of the slave proceeds to the frame sequence phase, step S712 is performed; or if the SPMI bus instruction period of bus arbitration of the slave does not proceed to the frame sequence phase, step S712 is repeatedly performed until the frame sequence phase arrives.

Step S712: Write preset data into a master with a preset master address.

In an embodiment of this application, the data supplementation module 132 writes the preset data such as 00 into a register of the master with the preset master address by using a master write instruction. In an embodiment of this application, the preset master address is different from addresses of all masters 12 connected to the integrated circuit device 13. For example, the addresses of all the masters 12 connected to the SPMI bus include address0 to address3. The data supplementation module 132 writes the preset data into a master 11 with a preset master address address4 different from address0 to address3.

Step S713: Determine whether an SPMI bus instruction period of bus arbitration of the master proceeds to a phase in which the master preempts the SPMI bus based on the highest priority.

If the SPMI bus instruction period of bus arbitration of the master proceeds to the phase in which the master preempts the SPMI bus based on the highest priority, step S714 is performed; or if the SPMI bus instruction period of bus arbitration of the master does not proceed to the phase in which the master preempts the SPMI bus based on the highest priority, step S713 is repeatedly performed, until a phase in which the master preempts the SPMI bus based on the highest priority arrives.

Step S714: Send the supplementary data to the slave when the master preempts the SPMI bus based on the highest priority.

In an embodiment of this application, the data supplementation module 132 sends the supplementary data to any one or more slaves 12 connected to the SPMI bus. In an embodiment of this application, the data supplementation module 132 writes a supplementary data value into a target slave by using an external register write instruction.

In an embodiment of this application, after sending the supplementary data to the target slave, the switch control module 133 controls each of the first switch 141 and the second switch 142 to be switched from the first path to the second path. In this way, the master 11 establishes a communication channel again to the slave 12 by using the first switch 141 and the second switch 142, and directly transmits the communication data to the slave 12 by using the first switch 141 and the second switch 142.

To maintain stable running of the SPMI bus during switching between the first working state and the second working state of the integrated circuit device 13, when it is detected that data supplementation needs to be performed (that is, the working state of the integrated circuit device 13 is the first working state), the integrated circuit device 13 first detects whether the SPMI bus is idle. When the SPMI bus is idle, the integrated circuit device 13 first initiates bus arbitration for the master by simulating the slave and through pulling up the data signal line, and initiates bus arbitration for the slave by simulating the master and through pulling up the integrated circuit device 13. After pull-up on both sides, the first switch 141 and the second switch 142 each are switched to the first path. In this way, the following case can be avoided: A spike generated in a switching process of the first switch 141 and the second switch 142 affects correct running of the SPMI bus. In addition, it is ensured that abnormality caused due to bus preemption performed by another master or slave does not occur when switching is performed on the first switch 141 and the second switch 142. In a process in which the integrated circuit device 13 performs data supplementation to the slave, the SPMI bus is preempted by the master with the highest priority, to ensure that no master performs a bus operation during data supplementation.

The integrated circuit device 13 monitors communication data on the SPMI bus, and after detecting that the communication data includes the preset instruction and the SPMI bus is idle, the integrated circuit device 13 first initiates bus arbitration for the master by simulating the slave and through pulling up the data signal line, and initiates bus arbitration for the slave by simulating the master and through pulling up the integrated circuit device 13, and writes the supplementary data value into the target slave. In this way, the external integrated circuit device 13 stably transmits the data of the slave 12.

In an embodiment of this application, when the integrated circuit device 13 works in the first working state, the integrated circuit device 13 can accurately recognize a current state of the SPMI bus. In this way, it can be ensured that the master 11 pulls up the data signal line based on the highest priority in a case of a rising edge of the clock signal line to preempt the SPMI bus. When the integrated circuit device 13 works in the second working state, the integrated circuit device 13 can recognize and store the communication data between the master and the slave, and recognize whether the communication data includes the preset instruction indicating a need for data supplementation.

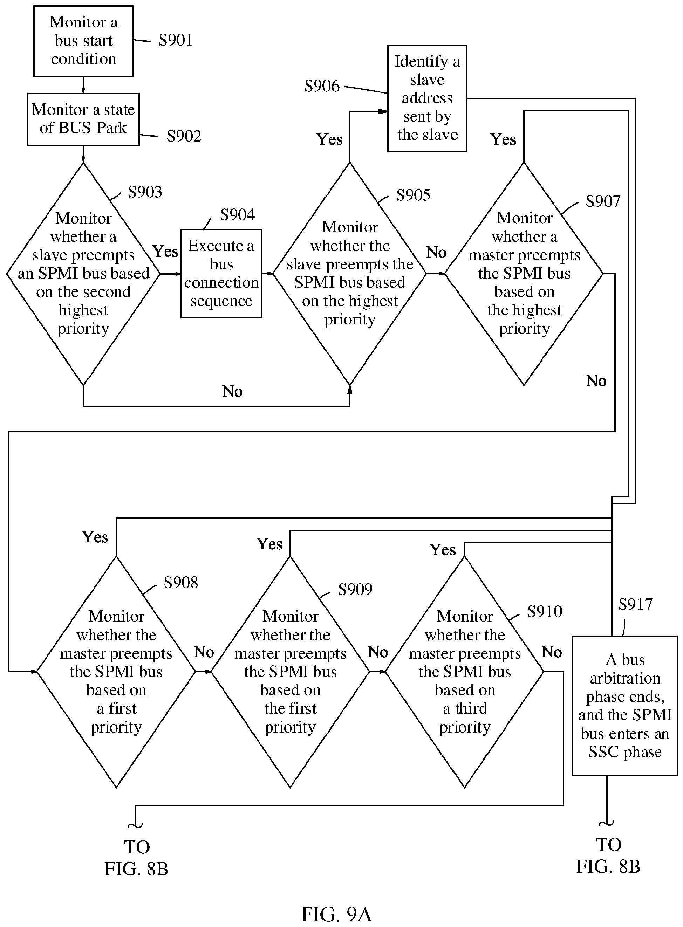

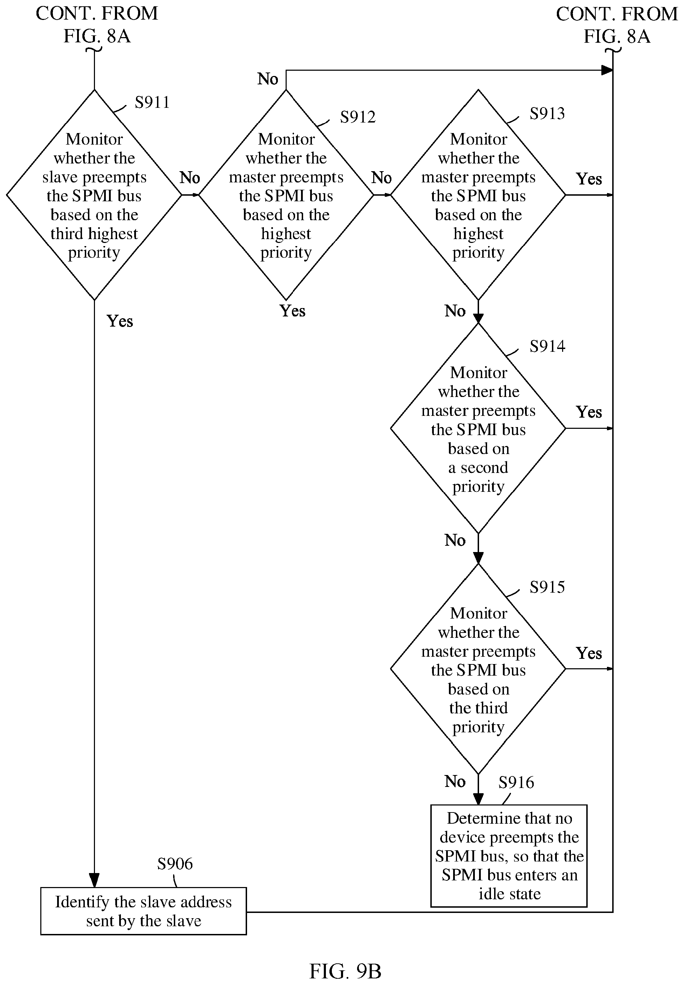

FIG. 9A and FIG. 9B are a schematic flowchart of a method for monitoring an SPMI bus according to an embodiment of this application. The method for monitoring an SPMI bus is applied in a bus arbitration phase of an SPMI bus instruction period. The method includes the following steps. Step S901: Monitor a bus start condition.

In an embodiment of this application, if it is detected that a data signal line of an SPMI bus is pulled up, and a clock signal line is kept at a low level, it is determined that the bus start condition is detected.

Step S902: Monitor a state of BUS Park of the SPMI bus.

In an implementation of this application, BUS Park represents a bus park period.

Step S903: Monitor whether a slave preempts the SPMI bus based on the second highest priority. If the slave preempts the SPMI bus based on the second highest priority, step S904 is performed. If the slave does not preempt the SPMI bus based on the second highest priority, step S905 is performed.

Step S904: Execute a bus connection sequence.

In an embodiment of this application, the bus connection sequence represents that another master 11 accesses the SPMI bus.

Step S905: Monitor whether the slave preempts the SPMI bus based on the highest priority. If the slave preempts the SPMI bus based on the highest priority, step S906 is performed. If the slave does not preempt the SPMI bus based on the highest priority, step S907 is performed.

Step S906: Identify a slave address sent by the slave. After execution of step S906 is completed, the procedure proceeds to step S917.

Step S907: Monitor whether a master preempts the SPMI bus based on the highest priority. If the master does not preempt the SPMI bus based on the highest priority, step S908 is performed. If the master preempts the SPMI bus based on the highest priority, step S917 is performed.

Step S908: Monitor whether the master preempts the SPMI bus based on a first priority. If the master does not preempt the SPMI bus based on the first priority, step S909 is performed. If the master preempts the SPMI bus based on the first priority, step S917 is performed. A priority level of the first priority is lower than a priority level of the highest priority.

Step S909: Monitor whether the master preempts the SPMI bus based on a second priority. If the master does not preempt the SPMI bus based on the second priority, step S910 is performed. If the master preempts the SPMI bus based on the second priority, step S917 is performed. A priority level of the second priority is lower than a priority level of the first priority.

Step S910: Monitor whether the master preempts the SPMI bus based on a third priority. If the master does not preempt the SPMI bus based on the third priority, step S911 is performed. If the master preempts the SPMI bus based on the third priority, step S917 is performed. A priority level of the third priority is lower than a priority level of the second priority.

Step S911: Monitor whether the slave preempts the SPMI bus based on the third highest priority. If the slave preempts the SPMI bus based on the third highest priority, step S906 is performed. If the slave does not preempt the SPMI bus based on the third highest priority, step S912 is performed. Step S912: Monitor whether the master preempts the SPMI bus based on the highest priority. If the master does not preempt the SPMI bus based on the highest priority, step S913 is performed. If the master preempts the SPMI bus based on the highest priority, step S917 is performed.

Step S913: Monitor whether the master preempts the SPMI bus based on a first priority. If the master does not preempt the SPMI bus based on the first priority, step S914 is performed. If the master preempts the SPMI bus based on the first priority, step S917 is performed.

Step S914: Monitor whether the master preempts the SPMI bus based on a second priority. If the master does not preempt the SPMI bus based on the second priority, step S915 is performed. If the master preempts the SPMI bus based on the second priority, step S917 is performed.

Step S915: Monitor whether the master preempts the SPMI bus based on a third priority. If the master does not preempt the SPMI bus based on the third priority, step S916 is performed. If the master preempts the SPMI bus based on the third priority, step S917 is performed.

Step S916: Determine that no device preempts the SPMI bus, so that the SPMI bus enters an idle state.

Step S917: The bus arbitration phase ends, and the SPMI bus enters an SSC phase.

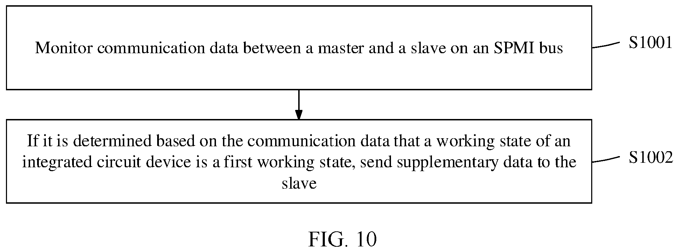

In this embodiment of this application, an integrated circuit device 13 uses a sampling method triggered by a clock falling edge, to monitor and recognize a current phase of the SPMI bus in an SPMI bus instruction period, so that a sending delay between a monitoring result and communication data of the master falls within a preset time range, for example, within 5 ns. FIG. 10 is a flowchart of a bus monitoring and controlling method according to another embodiment of this application. The method includes the following steps.

Step S1001: Monitor communication data between a master and a slave on an SPMI bus.

In an embodiment of this application, for a specific implementation step of step S1001, refer to step S702 in FIG. 7A. Details are not described herein again.

Step S1002: If it is determined based on the communication data that a working state of an integrated circuit device is a first working state, send supplementary data to the slave.

If it is detected that the SPMI bus is in an idle state, bus arbitration is performed on the master 11 by simulating the slave 12, and bus arbitration is performed on the slave 12 by simulating the master 11. Switching of the switch module 14 is controlled, so that the integrated circuit device 13 is separately connected to the master 11 and the slave 12. When it is determined that the master 11 preempts the SPMI bus based on the highest priority, the supplementary data is sent to the slave 12, so that the external integrated circuit device 13 controls data of the slave 12.

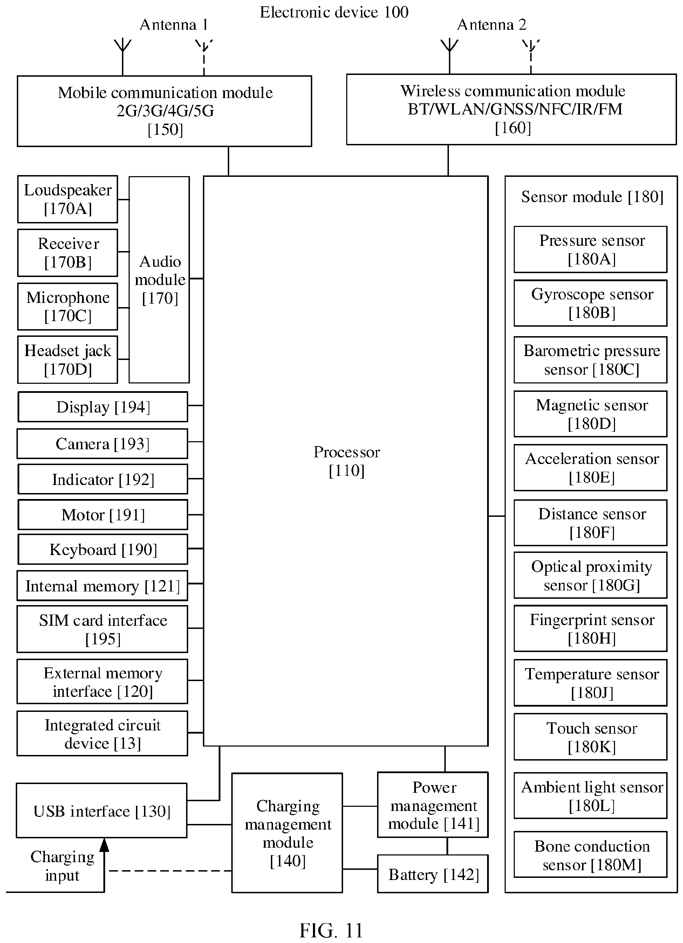

FIG. 11 is a diagram of a hardware structure of an electronic device 100 according to an embodiment of this application. The electronic device 100 includes a processor 110, an integrated circuit device 13, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus to implement communication between the processor 110 and the audio module 170. In some embodiments, the audio module 170 may transmit an audio signal to the wireless communication module 160 through the I2S interface, to perform a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to perform a function of playing music through the Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through a DSI interface, to implement a display function of the electronic device 100.

The GPIO interface may be configured by using software. The GPIO interface may be configured to transmit a control signal, or may be configured to transmit a data signal. In some embodiments, the GPIO interface may be configured to connect the processor 110 and the camera 193, the display 194, the wireless communication module 160, the audio module 170, the sensor module 180, or the like. The GPIO interface may also be configured as an I2C interface, an I2S interface, a UART interface, a MIPI, and the like.

The USB interface 130 is an interface that conforms to a USB standard specification, and may be specifically a mini USB interface, a micro USB interface, a USB type C interface, or the like. The USB interface 130 may be configured to connect to a charger to charge the electronic device 100, or may be configured to transmit data between the electronic device 100 and a peripheral device. The USB interface 130 may be alternatively configured to connect to a headset, to play audio through the headset. The interface may also be configured to connect to another electronic device 100, such as an AR device.

It may be understood that an interface connection relationship between the modules shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input by using a wireless charging coil of the electronic device 100. The charging management module 140 may further supply power to the electronic device 100 by using the power management module 141 while charging the battery 142.

The power management module 141 is configured to connect to the battery 142, the charging management module 140, and the processor 110. The power management module 141 receives an input from the battery 142 and/or the charging management module 140 and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may be alternatively disposed in the processor 110. In some other embodiments, the power management module 141 and the charging management module 140 may be alternatively disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to increase antenna utilization. For example, the antenna 1 may be multiplexed as a diversity antenna in a wireless local area network. In some other embodiments, the antenna may be used in combination with a tuning switch.

The mobile communication module 150 can provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert the signal into an electromagnetic wave for radiation through the antenna 1. In some embodiments, at least some functional modules of the mobile communication module 150 may be disposed in the processor 110. In some embodiments, at least some of the functional modules of the mobile communication module 150 may be disposed in a same device as at least some of modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the demodulated low-frequency baseband signal to the baseband processor for processing. After being processed by the baseband processor, the low-frequency baseband signal is transmitted to the application processor. The application processor outputs a sound signal through an audio device (which is not limited to the loudspeaker 170A, the receiver 170B, and the like), or displays an image or a video through the display 194. In some embodiments, the modem processor may be an independent device. In some other embodiments, the modem processor may be independent of the processor 110, and is disposed in a same device as the mobile communication module 150 or another functional module. The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave by using the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave by using the antenna 2 for radiation.

In some embodiments, the antenna 1 of the electronic device 100 is coupled to the mobile communication module 150, and the antenna 2 is coupled to the wireless communication module 160, so that the electronic device 100 can communicate with a network and other devices by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing and connects the display 194 to the application processor. The GPU is configured to perform mathematical and geometric calculation for graphics rendering. The processor 110 may include one or more GPUs that execute program instructions to generate or change display information. The display 194 is configured to display an image, a video, and the like. The display 194 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like.

In some embodiments, the electronic device 100 may include 1 or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal. The photosensitive element of the camera transmits the electrical signal to the ISP for processing, so that the ISP converts the electrical signal into an image visible to naked eyes. The ISP may further perform algorithm optimization on noise, brightness, and complexion of the image. The ISP may further optimize parameters such as exposure and a color temperature of a to-be-photographed scene. In some embodiments, the ISP may be disposed in the camera 193.

The camera 193 is configured to capture a static image or a video. An optical image of an object is generated through a lens and is projected onto a photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include 1 or N cameras 193, where N is a positive integer greater than 1.

The digital signal processor is configured to process a digital signal. In addition to a digital image signal, the digital signal processor can further process another digital signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. Therefore, the electronic device 100 may play or record videos in a plurality of encoding formats, such as moving picture experts group (moving picture experts group, MPEG)1, MPEG2, MPEG3, and MPEG4.

The NPU is a neural-network (neural-network, NN) computing processor, and simulates a biological neural network structure such as a transmission mode between neurons in a human brain, to rapidly process input information, and can perform continuous self-learning. Applications such as intelligent cognition of the electronic device 100, for example, image recognition, face recognition, speech recognition, and text understanding, may be implemented by using the NPU. The internal memory 121 may include one or more random access memories (random access memory, RAM) and one or more non-volatile memories (non-volatile memory, NVM).

The random access memory may include a static random access memory (static random-access memory, SRAM), dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, the fifth DDR SDRAM is usually known as DDR5 SDRAM), and the like. The non-volatile memory may include a magnetic disk storage device, and a flash memory (flash memory).

The flash memory may be classified into a NOR flash, a NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on an electric potential level of a cell; or may be classified into a universal flash storage (English: universal flash storage, UFS), an embedded multi media card (embedded multi media Card, eMMC), and the like according to storage specifications.

The random access memory may be directly read and written by using the processor 110, and may be configured to store an executable program (for example, a machine instruction) of an operating system or another running program, and may be further configured to store data of a user, data of an application, and the like.

The non-volatile memory may also store the executable program, the data of the user, the data of the application, and the like, which may be loaded into the random access memory in advance for the processor 110 to perform direct reading and writing.

The external memory interface 120 may be configured to connect to an external memory card, to expand a storage capacity of the electronic device 100. The external nonvolatile memory communicates with the processor 110 through the external memory interface 120, to implement a data storage function, for example, storing a file such as a music or a video in the external non-volatile memory.

The internal memory 121 or the external memory interface 120 is configured to store one or more computer programs. The one or more computer programs are configured to be executed by the processor 110. The one or more computer programs include a plurality of instructions. When the plurality of instructions are executed by the processor 110, the bus monitoring and controlling method performed on the electronic device 100 in the foregoing embodiments may be implemented, to implement bus monitoring and controlling functions of the electronic device 100. The electronic device 100 may implement an audio function such as music playing or recording by using the audio module 170, the loudspeaker 170A, the receiver 170B, the microphone 170C, the headset jack 170D, the application processor, and the like.

The audio module 170 is configured to convert digital audio information into an analog audio signal output, and also configured to convert an analog audio input into a digital audio signal. The audio module 170 may be further configured to encode and decode the audio signal. In some embodiments, the audio module 170 may be disposed in the processor 110, or some functional modules in the audio module 170 are disposed in the processor 110.

The loudspeaker 170A, also referred to as "horn", is configured to convert an electrical audio signal into a sound signal. The electronic device 100 may be used to listen to music or answer a hands-free call through the loudspeaker 170A.

The receiver 170B, also referred to as "earpiece", is configured to convert an electrical audio signal into a sound signal. When the electronic device 100 is configured to answer a call or receive voice information, the receiver 170B may be put close to a human ear to receive a voice.

The microphone 170C, also referred to as a "mic" or "mike", is configured to convert a sound signal into an electrical signal. When making a call or sending voice information, a user may make a sound by approaching a mouth to the microphone 170C, to input a sound signal to the microphone 170C. The electronic device 100 may be provided with at least one microphone 170C. In some other embodiments, the electronic device 100 may be provided with two microphones 170C, and may further implement a noise reduction function in addition to collecting a sound signal. In some other embodiments, the electronic device 100 may be alternatively provided with three, four, or more microphones 170C, to collect a sound signal, reduce noise, further recognize a sound source, implement a directional recording function, and the like.

The headset jack 170D is configured to connect to a wired headset. The headset jack 170D may be a USB interface 130, or may be a 3.5 mm open mobile terminal 100 platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be arranged in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, a capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may further calculate a touch position based on a detection signal of the pressure sensor 180A. In some embodiments, touch operations that are performed on a same touch position but have different touch operation intensity may correspond to different operation instructions. For example, when a touch operation whose touch operation intensity is less than a first pressure threshold is performed on an application icon of Messages, an instruction for checking a message is executed. When a touch operation whose touch operation intensity is greater than or equal to a first pressure threshold is performed on an application icon of Messages, an instruction for creating a new message is executed.

The gyroscope sensor 180B may be configured to determine a motion posture of the electronic device 100. In some embodiments, angular velocities of electronic device 100 around three axes (which are x, y, and z axes) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows a lens to cancel the jitter of the electronic device 100 through reverse motion, to implement image stabilization. The gyroscope sensor 180B may also be used in navigation and a motion sensing game scenario.

The barometric pressure sensor 180C is configured to measure barometric pressure. In some embodiments, the electronic device 100 calculates an altitude based on the barometric pressure measured by the barometric pressure sensor 180C, to assist in positioning and navigation. The magnetic sensor 180D may include a Hall sensor. The electronic device 100 may detect opening and closing of a flip leather cover by using the magnetic sensor 180D. In some embodiments, when the electronic device 100 is a clamshell phone, the electronic device 100 may detect opening and closing of a flip cover based on the magnetic sensor 180D. Further, features such as automatic unlocking of the flip cover are set based on the detected opening and closing states of the leather case or opening and closing states of the flip cover. The acceleration sensor 180E may detect magnitudes of acceleration in various directions (usually on three axes) of the electronic device 100, and may detect a magnitude and direction of gravity when the electronic device 100 is static. The acceleration sensor 180E may be further configured to recognize a posture of the electronic device 100, and is applied to switching between landscape orientation and portrait orientation, a pedometer, or another application. The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects reflected infrared light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may be further configured to automatically unlock and lock the screen in a leather cover mode and a pocket mode.

The ambient light sensor 180L is configured to sense ambient light brightness. The electronic device 100 may adaptively adjust brightness of the display 194 based on the perceived ambient light brightness. The ambient light sensor 180L may be further configured to automatically adjust white balance during photographing. The ambient light sensor 180L may also cooperate with the optical proximity sensor 180G to detect whether the electronic device 100 is in a pocket, to prevent an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is less than another threshold, the electronic device 100 heats the battery 142 to avoid abnormal shutdown of the electronic device 100 due to low temperature. In some other embodiments, when the temperature is lower than still another threshold, the electronic device 100 boosts an output voltage of the battery 142 to avoid abnormal shutdown due to low temperature.

The touch sensor 180K is also referred to as a "touch device". The touch sensor 180K may be disposed on the display 194. The touch sensor 180K and the display 194 form a touchscreen, which is also referred to as a "touch screen". The touch sensor 180K is configured to detect a touch operation on or near the touch sensor. The touch sensor may transmit the detected touch operation to the application processor to determine a type of a touch event. A visual output related to the touch operation may be provided by using the display 194. In some other embodiments, the touch sensor 180K may be alternatively disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may be in contact with a human pulse, to receive a blood pressure pulse signal. In some embodiments, the bone conduction sensor 180M may be alternatively disposed in a headset to be combined into a bone conduction headset. The audio module 170 may obtain a speech signal through parsing based on the vibration signal that is of the vibration bone in the vocal-cord part and that is obtained by the bone conduction sensor 180M, to implement a speech function. The application processor may parse heart rate information based on a blood pressure beating signal obtained by the bone conduction sensor 180M, to implement a heart rate measurement function.

The button 190 includes a power-on button, a volume button, and the like. The button 190 may be a mechanical button, or may be a touch key. The electronic device 100 may receive a button input and generate a button signal input related to a user setting and function control of the electronic device 100.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195 to implement contact with and separation from the electronic device 100. The electronic device 100 may support 1 or N SIM card interfaces, where N is a positive integer greater than 1. The SIM card interface 195 can support a nano SIM card, a micro SIM card, a SIM card, and the like. A plurality of cards may be inserted into a same SIM card interface 195 at the same time. The plurality of cards may be the same as or different from each other. The SIM card interface 195 is compatible with different types of SIM cards. The SIM card interface 195 is also compatible with an external storage card. The electronic device 100 interacts with a network through a SIM card, to implement functions such as a call and data communication. In some embodiments, the electronic device 100 uses an eSIM, namely, an embedded SIM card. The eSIM card may be embedded into the electronic device 100. An embodiment further provides a computer program product. When the computer program product runs on a computer, the computer is enabled to perform the controlling method according to any one of claims 1 to 11.

An apparatus is further provided.

The apparatus is specifically a chip. The apparatus includes a processor and a memory that are connected. The memory is configured to store computer-executable instructions. When the apparatus runs, the processor executes the computer-executable instructions stored in the memory, to enable the chip to perform the controlling method according to any one of claims 1 to 11.

The electronic device, the computer storage medium, the computer program product, or the chip provided in embodiments are configured to perform the controlling method according to any one of claims 1 to 11.

Therefore, for beneficial effects that can be achieved, refer to the beneficial effects of the corresponding method provided above. Details are not described herein again.

The indirect couplings or communication connections between the apparatus or units may be implemented in electronic, mechanical, or other forms.

The units described as separate parts may or may not be physically separate, and parts displayed as units may be one or more physical units, that is, may be located in one place, or may be distributed in a plurality of different places.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit is stored in a readable storage medium. Based on such an understanding, the technical solutions in some embodiments of this application essentially, or the part contributing to the conventional technologies, or all or some of the technical solutions may be implemented in a form of a software product. The software product is stored in a storage medium, and includes several instructions for instructing a device (which may be a single-chip microcomputer, a chip, or the like) or a processor to perform the controlling method according to any one of claims 1 to 11.

The foregoing storage medium includes: any medium that can store program code, such as a USB flash drive, a removable hard disk, a read-only memory (Read-Only Memory, ROM), a random access memory (Random Access Memory, RAM), a magnetic disk, a compact disc, or the like.

## Claims

1. A controlling method, applied to an integrated circuit device (13), wherein the integrated circuit device (13) is connected to a master (11), the master (11), the integrated circuit device (13), and a slave (12) are separately connected to a switch module (14) by using a system power management interface, SPMI bus, and the method comprises:
monitoring (S1001) communication data between the master (11) and the slave (12) in the SPMI bus; and
if it is determined based on the communication data that a working state of the integrated circuit device (13) is a first working state, sending (S1002) preset supplementary data to the slave (12), wherein
the sending preset supplementary data to the slave (12) comprises:
if it is detected that the SPMI bus is in an idle state, performing bus arbitration on the master (11) by simulating the slave (12), and performing bus arbitration on the slave (12) by simulating the master (11);
controlling switching of the switch module (14), so that the integrated circuit device (13) is separately connected to the master (11) and the slave (12); and
sending the supplementary data to the slave (12) when it is determined that the master (11) with the highest priority preempts the SPMI bus.

2. The controlling method according to claim 1, wherein the method further comprises:
if it is determined based on the communication data that the working state of the integrated circuit device (13) is a second working state, controlling switching of the switch module (14), so that the master (11) is connected to the slave (12).

3. The controlling method according to claim 1 or 2, wherein determining the working state of the integrated circuit device (13) based on the communication data comprises:
if it is determined that the communication data comprises a preset instruction, determining that the working state of the integrated circuit device (13) is the first working state; or
if it is determined that the communication data does not comprise a preset instruction, determining that the working state of the integrated circuit device (13) is the second working state.

4. The controlling method according to claim 1, wherein the performing bus arbitration on the master (11) by simulating the slave (12), and performing bus arbitration on the slave (12) by simulating the master (11) comprises:
through pulling up a data signal line of an SPMI bus connected to an upper port of the integrated circuit device (13), performing bus arbitration on the master (11) by simulating the slave (12), wherein the upper port is connected to the master (11) through the SPMI bus; and
through pulling up a data signal line of an SPMI bus connected to a lower port of the integrated circuit device (13), performing bus arbitration on the slave (12) by simulating the master (11), wherein the lower port is connected to the slave (12) through the SPMI bus.

5. The controlling method according to claim 1, when the sending the supplementary data to the slave (12) when it is determined that the master (11) with the highest priority preempts the SPMI bus comprises:
writing the supplementary data value into the slave (12) by using an external register write instruction.

6. The controlling method according to claim 1, wherein after the performing bus arbitration on the master (11) by simulating the slave (12), the method further comprises:
sending a preset slave (12) address to the master (11) if an SPMI bus instruction period of bus arbitration of the slave (12) proceeds to a phase in which the slave (12) with the highest priority preempts the SPMI bus.

7. The controlling method according to claim 6, wherein after the sending a preset slave (12) address to the master (11), the method further comprises:
writing preset data into the master (11) with a preset master (11) address if the SPMI bus instruction period of bus arbitration of the slave (12) proceeds to a frame sequence phase.

8. The controlling method according to claim 7, wherein the writing preset data into the master (11) with a preset master (11) address comprises:
writing the preset data into a register of the master (11) with the preset master (11) address by using a master (11) write instruction.

9. The controlling method according to claim 1, wherein the supplementary data is data determined based on a type of the slave (12).

10. The controlling method according to claim 1, wherein the performing bus arbitration on the master (11) by simulating the slave (12), and performing bus arbitration on the slave (12) by simulating the master (11) comprises:
through pulling up a data signal line of an SPMI bus connected to an upper port of the integrated circuit device (13), performing bus arbitration on the master (11) by simulating the slave (12), wherein the upper port is connected to the master (11) through the SPMI bus, and pulling up the data signal line of the SPMI bus connected to the upper port of the integrated circuit device (13) indicates setting the data signal line of the SPMI bus connected to the upper port to a high potential; and
through pulling up a data signal line of an SPMI bus connected to a lower port of the integrated circuit device (13), performing bus arbitration on the slave (12) by simulating the master (11), wherein the lower port is connected to the slave (12) through the SPMI bus, and pulling up the data signal line of the SPMI bus connected to the lower port of the integrated circuit device (13) indicates setting the data signal line of the SPMI bus connected to the lower port to a high potential.

11. The controlling method according to claim 1, wherein the master (11) is a system-on-a-chip, SOC, the slave (12) is a power management chip, PMIC.

12. An electronic device, wherein the electronic device comprises a memory and a processor;
the memory is configured to store program instructions; and
the processor is configured to read and execute the program instructions stored in the memory, and when the program instructions are executed by the processor, the electronic device is enabled to perform the controlling method according to any one of claims 1 to 11.

13. A chip, comprising the electronic device according to claim 12.

14. A computer storage medium, wherein the computer storage medium stores program instructions, and when the program instructions are run on an electronic device, the electronic device is enabled to perform the controlling method according to any one of claims 1 to 11.

## Patentansprüche

1. Ein Steuerverfahren, angewendet auf eine integrierte Schaltungsvorrichtung (13), wobei die integrierte Schaltungsvorrichtung (13) mit einem Master (11) verbunden ist, der Master (11), die integrierte Schaltungsvorrichtung (13) und ein Slave (12) jeweils über eine System Power Management Interface, SPMI-Bus, mit einem Schaltmodul (14) verbunden sind, und das Verfahren umfasst:
Überwachung (S1001) der Kommunikationsdaten zwischen dem Master (11) und dem Slave (12) im SPMI-Bus; und
wenn anhand der Kommunikationsdaten festgestellt wird, dass sich der Betriebszustand der integrierten Schaltungsvorrichtung (13) in einem ersten Betriebszustand befindet, wird (S1002) voreingestellte Zusatzdaten an den Slave (12) gesendet, wobei
das Senden der voreingestellten Zusatzdaten an den Slave (12) umfasst:
falls festgestellt wird, dass sich der SPMI-Bus im Leerlaufzustand befindet, wird eine Busarbitrierung am Master (11) durch Simulation des Slave (12) durchgeführt und eine Busarbitrierung am Slave (12) durch Simulation des Master (11);
Steuerung der Umschaltung des Schaltmoduls (14), so dass die integrierte Schaltungsvorrichtung (13) jeweils separat mit dem Master (11) und dem Slave (12) verbunden ist; und
Senden der Zusatzdaten an den Slave (12), wenn festgestellt wird, dass der Master (11) mit der höchsten Priorität den SPMI-Bus übernimmt.

2. Steuerverfahren nach Anspruch 1, wobei das Verfahren ferner umfasst:
wenn anhand der Kommunikationsdaten festgestellt wird, dass der Betriebszustand der integrierten Schaltungsvorrichtung (13) ein zweiter Betriebszustand ist, Steuerung der Umschaltung des Schaltmoduls (14), sodass der Master (11) mit dem Slave (12) verbunden wird.

3. Steuerverfahren nach Anspruch 1 oder 2, wobei die Ermittlung des Betriebszustandes der integrierten Schaltungsvorrichtung (13) basierend auf den Kommunikationsdaten umfasst:
wenn festgestellt wird, dass die Kommunikationsdaten einen voreingestellten Befehl enthalten, wird festgestellt, dass der Betriebszustand der integrierten Schaltungsvorrichtung (13) der erste Betriebszustand ist; oder
wenn festgestellt wird, dass die Kommunikationsdaten keinen voreingestellten Befehl enthalten, wird festgestellt, dass der Betriebszustand der integrierten Schaltungsvorrichtung (13) der zweite Betriebszustand ist.

4. Steuerverfahren nach Anspruch 1, wobei die Durchführung der Busarbitrierung am Master (11) durch Simulation des Slave (12) und die Durchführung der Busarbitrierung am Slave (12) durch Simulation des Master (11) umfasst:
Durch Hochziehen einer Datensignalleitung eines SPMI-Busses, der mit einem oberen Anschluss der integrierten Schaltungsvorrichtung (13) verbunden ist, wird die Busarbitrierung am Master (11) durch Simulation des Slave (12) durchgeführt, wobei der obere Anschluss über den SPMI-Bus mit dem Master (11) verbunden ist; und
Durch das Hochziehen einer Datensignalleitung eines an einen unteren Port der integrierten Schaltungsvorrichtung (13) angeschlossenen SPMI-Busses wird eine Busarbitrierung am Slave (12) durch Simulation des Masters (11) durchgeführt, wobei der untere Port über den SPMI-Bus mit dem Slave (12) verbunden ist.

5. Das Steuerungsverfahren gemäß Anspruch 1, wobei beim Senden der ergänzenden Daten an den Slave (12), wenn festgestellt wird, dass der Master (11) mit der höchsten Priorität den SPMI-Bus übernimmt, folgendes umfasst:
Das Schreiben des ergänzenden Datenwerts in den Slave (12) mittels eines externen Register-Schreibbefehls.

6. Das Steuerungsverfahren gemäß Anspruch 1, wobei nach der Durchführung der Busarbitrierung am Master (11) durch Simulation des Slaves (12) das Verfahren weiterhin umfasst:
Das Senden einer voreingestellten Slave-(12)-Adresse an den Master (11), wenn eine SPMI-Bus-Befehlsperiode der Busarbitrierung des Slaves (12) in eine Phase eintritt, in der der Slave (12) mit der höchsten Priorität den SPMI-Bus übernimmt.

7. Das Steuerungsverfahren gemäß Anspruch 6, wobei nach dem Senden einer voreingestellten Slave-(12)-Adresse an den Master (11) das Verfahren weiterhin umfasst:
Das Schreiben voreingestellter Daten in den Master (11) mit einer voreingestellten Master-(11)-Adresse, wenn die SPMI-Bus-Befehlsperiode der Busarbitrierung des Slaves (12) in eine Rahmensequenzphase eintritt.

8. Das Steuerungsverfahren gemäß Anspruch 7, wobei das Schreiben voreingestellter Daten in den Master (11) mit einer voreingestellten Master-(11)-Adresse folgendes umfasst:
Das Schreiben der voreingestellten Daten in ein Register des Masters (11) mit der voreingestellten Master-(11)-Adresse mittels eines Master-(11)-Schreibbefehls.

9. Das Steuerungsverfahren gemäß Anspruch 1, wobei die ergänzenden Daten auf Basis eines Typs des Slaves (12) bestimmte Daten sind.

10. Das Steuerungsverfahren gemäß Anspruch 1, wobei die Durchführung der Busarbitrierung am Master (11) durch Simulation des Slaves (12) und die Durchführung der Busarbitrierung am Slave (12) durch Simulation des Masters (11) folgendes umfasst:
Durch das Hochziehen einer Datensignalleitung eines an einen oberen Port der integrierten Schaltungsvorrichtung (13) angeschlossenen SPMI-Busses wird die Busarbitrierung am Master (11) durch Simulation des Slaves (12) durchgeführt, wobei der obere Port über den SPMI-Bus mit dem Master (11) verbunden ist, und das Hochziehen der Datensignalleitung des an den oberen Port angeschlossenen SPMI-Busses bedeutet, dass die Datensignalleitung auf ein hohes Potential gesetzt wird; und
Durch Hochziehen einer Datensignalleitung eines SPMI-Busses, die mit einem unteren Port der integrierten Schaltungsvorrichtung (13) verbunden ist, wird eine Busarbitrierung am Slave (12) durch Simulation des Masters (11) durchgeführt, wobei der untere Port über den SPMI-Bus mit dem Slave (12) verbunden ist. Das Hochziehen der Datensignalleitung des SPMI-Busses, die mit dem unteren Port der integrierten Schaltungsvorrichtung (13) verbunden ist, bedeutet, dass die Datensignalleitung des SPMI-Busses, die mit dem unteren Port verbunden ist, auf ein hohes Potential gesetzt wird.

11. Das Steuerungsverfahren nach Anspruch 1, wobei der Master (11) ein System-on-a-Chip (SoC) ist und der Slave (12) ein Power-Management-Chip (PMIC) ist.

12. Eine elektronische Vorrichtung, wobei die elektronische Vorrichtung einen Speicher und einen Prozessor umfasst;
Der Speicher ist dazu eingerichtet, Programmanweisungen zu speichern; und
Der Prozessor ist dazu eingerichtet, die im Speicher gespeicherten Programmanweisungen zu lesen und auszuführen, und wenn die Programmanweisungen vom Prozessor ausgeführt werden, ist die elektronische Vorrichtung dazu befähigt, das Steuerungsverfahren gemäß einem beliebigen der Ansprüche 1 bis 11 durchzuführen.

13. Ein Chip, der die elektronische Vorrichtung gemäß Anspruch 12 umfasst.

14. Ein Computerspeichermedium, wobei das Computerspeichermedium Programmanweisungen speichert, und wenn die Programmanweisungen auf einer elektronischen Vorrichtung ausgeführt werden, ist die elektronische Vorrichtung dazu befähigt, das Steuerungsverfahren gemäß einem beliebigen der Ansprüche 1 bis 11 durchzuführen.

## Revendications

1. Procédé de commande, appliqué à un dispositif circuit intégré (13), dans lequel le dispositif circuit intégré (13) est connecté à un maître (11), le maître (11), le dispositif circuit intégré (13) et un esclave (12) étant chacun connectés séparément à un module de commutation (14) au moyen d'une interface de gestion de l'alimentation du système, bus SPMI, et le procédé comprend :
la surveillance (S1001) des données de communication entre le maître (11) et l'esclave (12) sur le bus SPMI ; et
si, sur la base des données de communication, il est déterminé que l'état de fonctionnement du dispositif circuit intégré (13) est un premier état de fonctionnement, l'envoi (S1002) de données supplémentaires prédéfinies à l'esclave (12), dans lequel
l'envoi de données supplémentaires prédéfinies à l'esclave (12) comprend :
si le bus SPMI est détecté dans un état inactif, l'arbitrage du bus sur le maître (11) par simulation de l'esclave (12), et l'arbitrage du bus sur l'esclave (12) par simulation du maître (11) ;
le contrôle de la commutation du module de commutation (14), de sorte que le dispositif circuit intégré (13) soit connecté séparément au maître (11) et à l'esclave (12) ; et
l'envoi des données supplémentaires à l'esclave (12) lorsque le maître (11) ayant la priorité la plus élevée s'approprie le bus SPMI.

2. Procédé de commande selon la revendication 1, selon lequel le procédé comprend en outre :
si, sur la base des données de communication, il est déterminé que l'état de fonctionnement du dispositif circuit intégré (13) est un second état de fonctionnement, contrôler la commutation du module de commutation (14), de sorte que le maître (11) soit connecté à l'esclave (12).

3. Procédé de commande selon la revendication 1 ou 2, selon lequel la détermination de l'état de fonctionnement du dispositif circuit intégré (13) sur la base des données de communication comprend :
si l'on détermine que les données de communication comprennent une instruction prédéfinie, déterminer que l'état de fonctionnement du dispositif circuit intégré (13) est le premier état de fonctionnement ; ou
si l'on détermine que les données de communication ne comprennent pas d'instruction prédéfinie, déterminer que l'état de fonctionnement du dispositif circuit intégré (13) est le second état de fonctionnement.

4. Procédé de commande selon la revendication 1, selon lequel l'arbitrage du bus sur le maître (11) par simulation de l'esclave (12), et l'arbitrage du bus sur l'esclave (12) par simulation du maître (11), comprend :
par le tirage vers le haut d'une ligne de signal de données d'un bus SPMI connecté à un port supérieur du dispositif circuit intégré (13), arbitrer le bus sur le maître (11) par simulation de l'esclave (12), ledit port supérieur étant connecté au maître (11) via le bus SPMI ; et
en tirant vers le haut une ligne de signal de données d'un bus SPMI connecté à un port inférieur du dispositif de circuit intégré (13), l'arbitrage du bus sur l'esclave (12) est effectué en simulant le maître (11), le port inférieur étant connecté à l'esclave (12) via le bus SPMI.

5. La méthode de contrôle selon la revendication 1, lorsque l'envoi des données supplémentaires à l'esclave (12) a lieu lorsqu'il est déterminé que le maître (11) ayant la priorité la plus élevée s'approprie le bus SPMI, comprend :
l'écriture de la valeur des données supplémentaires dans l'esclave (12) au moyen d'une instruction externe d'écriture dans le registre.

6. La méthode de contrôle selon la revendication 1, dans laquelle, après l'arbitrage du bus sur le maître (11) par simulation de l'esclave (12), la méthode comprend en outre :
l'envoi d'une adresse d'esclave (12) prédéfinie au maître (11) si une période d'instruction du bus SPMI pour l'arbitrage du bus de l'esclave (12) passe à une phase où l'esclave (12) ayant la priorité la plus élevée s'approprie le bus SPMI.

7. La méthode de contrôle selon la revendication 6, dans laquelle, après l'envoi d'une adresse d'esclave (12) prédéfinie au maître (11), la méthode comprend en outre :
l'écriture de données prédéfinies dans le maître (11) avec une adresse de maître (11) prédéfinie si la période d'instruction du bus SPMI pour l'arbitrage du bus de l'esclave (12) passe à une phase de séquence de trame.

8. La méthode de contrôle selon la revendication 7, dans laquelle l'écriture des données prédéfinies dans le maître (11) avec une adresse de maître (11) prédéfinie comprend :
l'écriture des données prédéfinies dans un registre du maître (11) ayant l'adresse de maître (11) prédéfinie au moyen d'une instruction d'écriture du maître (11).

9. La méthode de contrôle selon la revendication 1, dans laquelle les données supplémentaires sont des données déterminées en fonction du type de l'esclave (12).

10. La méthode de contrôle selon la revendication 1, dans laquelle l'arbitrage du bus sur le maître (11) par simulation de l'esclave (12) et l'arbitrage du bus sur l'esclave (12) par simulation du maître (11) comprennent :
en tirant vers le haut une ligne de signal de données du bus SPMI connectée à un port supérieur du dispositif de circuit intégré (13), l'arbitrage du bus sur le maître (11) est effectué en simulant l'esclave (12), le port supérieur étant connecté au maître (11) via le bus SPMI, et tirer vers le haut la ligne de signal de données du bus SPMI connectée au port supérieur du dispositif de circuit intégré (13) signifie régler la ligne de signal de données du bus SPMI connectée au port supérieur à un potentiel élevé ; et
en tirant vers le haut une ligne de signal de données d'un bus SPMI relié à un port inférieur du dispositif de circuit intégré (13), en procédant à l'arbitrage du bus sur l'esclave (12) par la simulation du maître (11), le port inférieur étant connecté à l'esclave (12) via le bus SPMI, et le fait de tirer vers le haut la ligne de signal de données du bus SPMI reliée au port inférieur du dispositif de circuit intégré (13) indique que la ligne de signal de données du bus SPMI reliée au port inférieur est réglée à un potentiel élevé.

11. Le procédé de commande selon la revendication 1, dans lequel le maître (11) est un système sur puce, SOC, et l'esclave (12) est une puce de gestion d'alimentation, PMIC.

12. Un dispositif électronique, ledit dispositif électronique comprenant une mémoire et un processeur ;
la mémoire est configurée pour stocker des instructions de programme ; et
le processeur est configuré pour lire et exécuter les instructions de programme stockées dans la mémoire, et lorsque les instructions de programme sont exécutées par le processeur, le dispositif électronique est habilité à effectuer le procédé de commande selon l'une quelconque des revendications 1 à 11.

13. Une puce, comprenant le dispositif électronique selon la revendication 12.

14. Un support de stockage informatique, ledit support de stockage informatique stockant des instructions de programme, et lorsque les instructions de programme sont exécutées sur un dispositif électronique, ledit dispositif électronique est habilité à effectuer le procédé de commande selon l'une quelconque des revendications 1 à 11.
